# EUROPEAN PATENT SPECIFICATION

(11) **EP 2 325 784 B1**
(45) Date of publication and mention of the grant of the patent: **05.08.2015**
(21) Application number: 10190406.8
(22) Date of filing: 08.11.2010
(51) Int. Cl.: G06K 19/07, G06K 19/077, A01N 43/00, C09D 5/16, C02F 1/50, A01N 25/00, A01N 59/00, G06K 19/02, G06K 19/04

(54) **Antifouling sign containing electronically readable and/or writable tag**
Fäulnisverhinderndes Zeichen mit elektronisch les- und/oder beschreibbarem Etikett
Signe antisalissure contenant une étiquette pouvant être lue et/ou écrite électroniquement

(30) Priority: 12.11.2009 GB 0919799
(43) Date of publication of application: 25.05.2011
(73) Proprietor: The Champion Partnership, Aberdeen, Aberdeenshire AB12 3QH (GB)
(72) Inventor: Learmonth, Emma, Aberdeen, Aberdeenshire AB12 3QH (GB); Milne, John Alastair, Aberdeen, Aberdeenshire AB12 3QH (GB)
(74) Representative: Lincoln, Matthew

(56) References cited:
- DE-A1-102008 012 419
- GB-A- 2 326 372
- US-A1- 2005 270 901
- US-A1- 2006 062 981
- US-B1- 6 502 757

## Description

The present invention relates to an antifouling sign comprising an antifouling material and an electronically readable and/or writable identification tag and a method for its manufacture. In particular, the present invention relates to an antifouling sign used for the identification of subsea infrastructure and equipment.

### Background to the invention

An RFID tag is one known type of electronically readable and/or writable identification tag which has been proposed for use subsea in the offshore industry. There are generally three types of RFID tags known in the art: active RFID tags, which contain a battery and can transmit signals autonomously; passive RFID tags, which have no battery and require an external source to provoke signal transmission; and battery assisted passive (BAP) which require an external source to wake up but have significant higher forward link capability providing greater reading ranges. Each type of RFID tag contains an integrated circuit for storing and processing information, modulating and demodulating a radiofrequency (RF) signal, and other specialised functions. The RFID tags also contain an antenna for receiving and transmitting the RF signals.

RFID tags with identification information stored thereon have been proposed to be attached to subsea infrastructure and equipment. The RFID tags may also store information pertaining to the deployment of the item of infrastructure, for example the date of deployment or date of last inspection. It is preferable for the RFID tags to offer a read and write capability so that the stored information can be downloaded and updated as appropriate.

The information stored on an RFID tag is proposed to be read and updated either via a handheld reader operated by a diver at depths of up to around 100m or alternatively by a reader mounted on a remotely operated vehicle (ROV) at depths of up to around 3000m. Alternatively the RFID tag is read when the installation is on the surface, before or after being located subsea. In practice the distances over which RFID tags can transmit when located subsea is limited by an inverse square law and therefore there is often a problem in attempting to find the location of these tags so as to read, or write, the relevant information. This problem is exacerbated in the event of the failure or partial malfunction of an RFID tag which often leads to significant periods of time being spent by the diver or operator of the ROV trying to locate the physical position of the failed tag. If the position of the RFID tag cannot be found then the stored information is potentially lost.

Barcodes have been proposed for use in the offshore industry to keep a stock inventory of subsea infrastructure or equipment held topside on an offshore platform or onshore before and/or after deployment subsea. Typically the barcode is read when the installation is on the surface, before being located subsea. In practice the barcode is often printed on a paper label and temporarily adhered to a surface of the installation of part thereof. The barcode is intended to be used as an initial identification means. Surface storage of the installation for an extended period of time or installation subsea will result in damage to or removal of the barcode.

GB 2,434,022 describes a method of mounting an antifouling sign to an object, such as a subsea pipe section.

US 2009/115616 discloses an RFID device enclosed in an enclosure suitable for harsh environments, such as industrial facilities.

WO 2009/118505 describes a method of tagging electrical or electronic cables using an RFID device which is covered by the cable covering to protect it from weathering, rodents and other damage.

It is an object of an aspect of the present invention to obviate or at least mitigate the foregoing disadvantages of previous proposals to use electronically readable and/or writable identification tags with subsea infrastructure and equipment.

Another object of the invention is to provide electronically readable and/or writable identification tags for use with subsea infrastructures which are alternative to those proposed in the prior art.

### Summary of Invention

According to a first aspect of the present invention there is provided an antifouling sign for use on a subsea structure, the sign comprising a marker formed from an antifouling material; characterised in that an electronically readable and/or writable identification tag is incorporated in the marker.

By employing an antifouling marker to provide a means for visual identification of the electronically readable and/or writable tag, the subsea location of the tag can readily be observed by a diver or the operator of a ROV so allowing them to quickly bring a tag reader in communication range with the tag, as is required for its correct operation. As a result, the information stored on the electronically readable and/or writable identification tag can be efficiently read, downloaded and/or updated, as required.

The sign provides a visual means for identifying the subsea structure and a means for accessing information stored either in or on the electronically readable and/or writable identification tag. Alternatively the electronically readable and/or writable identification tag provides access to information or data stored remotely from the tag.

The electronically readable and/or writable identification tag may be integrated into the antifouling material of the marker. Therefore the invention may provide a body or volume of antifouling material of which the tag is an integral part. The tag may be fully or partially embedded in the antifouling material or may be implanted in the antifouling material. Typically the electronically readable and/or writable identification tag is operable to be read when the antifouling sign is on the surface, before and/or after being located subsea. Preferably the electronically readable and/or writable identification tag is operable to be read when the antifouling sign is located subsea.

By employing an antifouling marker to provide a means for visual identification of the electronically readable and/or writable identification tag the subsea location of the tag can readily be observed by a diver or the operator of a ROV so allowing them to quickly bring the tag into communication range with a reader. Information stored on the electronically readable and/or writable identification tag can be efficiently read, downloaded and/or updated, as required.

The antifouling sign may comprise numerals, letters, words, phrases, regular or irregular shapes to provide information about an installation located subsea or on surface prior to or after being located subsea. The antifouling material minimises the impact foulers, including biofouling marine organisms, have on the surfaces of the sign when located subsea. The antifouling material may be polymeric, and may be a polymeric antifouling silicone based composition such as that disclosed in for example in British Patent No. 1,307,001.

The antifouling material may comprise a fluid organic compound which has a tendency to exude from the surface of the sign when in use, thereby further reducing aquatic growth and fouling of the sign. Examples of suitable materials include silicon oils (see for example the teachings of British Patent No. 1,470,465, low molecular weight polyolefins, polyesters, polyisocynates, polyurethanes, polyepoxides, lubricating oils and plasticizers, as described in British Patent No. 1,581,727.

The antifouling sign may comprise a mount. Optionally the mount comprises one or more of a backing member and a fixing frame. The antifouling material may be attached to the backing member. At least one perimeter section of the antifouling material may be secured between the fixing frame and the backing panel. Preferably the fixing frame locates around the entire perimeter of the antifouling material. The mount may be used to secure the antifouling sign to a subsea structure.

Preferably the backing member and the fixing frame of the mount comprise a thermoplastic material. The use of a thermoplastic material allows welding of a seal between one or more of the backing member, fixing frame and antifouling material. The seal reduces the likelihood of physical damage to the antifouling material and/or electronically readable and/or writable identification tag.

Optionally the thermoplastic material comprises one or more of polypropylene, polyethylene, polyvinyl chloride, unplasticised polyvinyl chloride, polystyrene, polyvinylidene fluoride, acrylic compounds, synthetic rubber such as chlorosulfonated polyethylene, a polycarbonate polymer, and a polyisobutene polymer.

Optionally the fixing frame and the backing member comprise one or more apertures suitable for receiving a securing bolt. Preferably the backing member comprises one or more recesses suitable for housing a nut for the securing bolt.

Optionally the electronically readable and/or writable identification tag comprises a radio frequency identification (RFID) tag, which may be fully or partially embedded or implanted in the antifouling material. Thus the antifouling material prevents fouling around the RFID tag which may impede its visual detection and/or communication with a read/write apparatus.

Alternatively the electronically readable and/or writable identification tag comprises an optically readable tag such as a barcode. By using a barcode to provide information relating to the subsea structure the physical dimensions of the sign, and therefore also the antifouling material required to make the sign, are limited whilst increasing the amount of accessible information relating to a particular subsea structure.

Optionally the antifouling sign further comprises a visual identification mark. Optionally the visual identification mark displays a duplication of information or complementary information to that stored or accessed by the barcode and/or radio frequency identification tag.

Optionally the optically readable tag is a one-dimensional barcode. One-dimensional barcodes comprise a plurality of lines and spaces between the lines or concentric circles and spaces between the circles.

Optionally the optically readable tag is a two-dimensional barcode. Two-dimensional barcodes comprise a geometric pattern. Optionally the geometric pattern comprises a plurality of one or more squares, dots and hexagons.

The optically readable tag may be integrated with the antifouling material or formed on the surface of the antifouling material.

Optionally the electronically readable and/or writable identification tag comprises a radio frequency identification tag and a barcode.

There may also be provided an antifouling sign for use on a subsea structure, the sign comprising a marker formed from an antifouling material and a radio frequency identification tag incorporated in the marker.

Advantageously the radio frequency identification tag is embedded fully or partially in the antifouling material.

There may also be provided an antifouling sign for use on a subsea structure, the sign comprising a marker formed from an antifouling material and a barcode incorporated in the marker.

According to a second aspect of the present invention there is provided a method of producing an antifouling sign the method comprising:
providing an antifouling material; characterised in that the method comprises incorporating an electronically readable and/or writable identification tag in the antifouling material.

Optionally the electronically readable and/or writable identification tag comprises a radio frequency identification tag. Typically the electronically readable and/or writable identification tag comprises a barcode. Optionally the electronically readable and/or writable identification tag comprises a radio frequency identification tag and a barcode.

The antifouling material may be polymeric, and may be a polymeric antifouling silicone based composition such as that disclosed in for example in British Patent No. 1,307,001. The antifouling material may comprise a fluid organic compound which has a tendency to exude from the surface of the sign when in use, thereby further reducing aquatic growth and fouling of the sign. Examples of suitable materials include silicon oils (see for example the teachings of British Patent No. 1,470,465, low molecular weight polyolefins, polyesters, polyisocynates, polyurethanes, polyepoxides, lubricating oils and plasticizers, as described in British Patent No. 1,581,727.

The antifouling material may be moulded around the electronically readable and/or writable identification tag.

The method may further comprise pouring a volume of antifouling material into a hollow of the mould. Preferably the volume of the antifouling material is allowed to partially cure before locating the radio frequency identification tag in the mould.

Alternatively the antifouling material is moulded around an optically readable pattern, for example of a barcode.

The method may comprise the step of forming an optically readable pattern from cured or partially-cured antifouling material. Preferably the optically readable pattern is arranged and secured in a hollow of a mould. Preferably a volume of antifouling material is poured into the hollow.

Preferably the bars or lines are visible from at least one face of the antifouling sign.

Advantageously the method comprises curing the antifouling material while allowing any air and/or other gases trapped in the antifouling material to escape through a vent in the mould.

The method may comprise the step of inclining the mould.

According to a third aspect of the invention there is provided a method of retrieving data from an antifouling sign, the method comprising the steps of:
providing a sign at a subsea location, the sign comprising a marker formed from an antifouling material;
characterised in that the sign comprises an electronically readable and/or writable identification tag incorporated in the marker;
and the method comprises:
moving an electronic reading apparatus to within a range at which the sign can be electronically read; and
electronically reading the electronic readable identification tag using the electronic reading apparatus.

Optionally the electronically readable and/or writable identification tag comprises a radio frequency identification tag. Typically the electronically readable and/or writable identification tag comprises a barcode. Optionally the electronically readable and/or writable identification tag comprises a radio frequency identification tag and a barcode.

### Brief Description of Drawings

There will now be described, by way of example only, various embodiments of the invention with reference to the drawings, of which:
Figure 1A presents a perspective view and Figures 1B and 1C present side views of an antifouling sign in accordance with an embodiment of the present invention, the sign comprising a radio frequency identification (RFID) tag;
Figures 2A to 2H present a method of forming the sign of Figure 1A;
Figure 3A presents a perspective view and Figures 3B and 3C present side views of an antifouling sign in accordance with another embodiment of the present invention, the sign comprising a radio frequency identification (RFID) tag and a visual identification mark;
Figure 4A presents a perspective view and Figures 4B and 4C present side views of an antifouling sign in accordance with an embodiment of the present invention, the sign comprising a barcode;
Figure 5 presents a schematic perspective view of an antifouling sign in accordance with an embodiment of the present invention, the sign comprising a radio frequency identification (RFID) tag; and

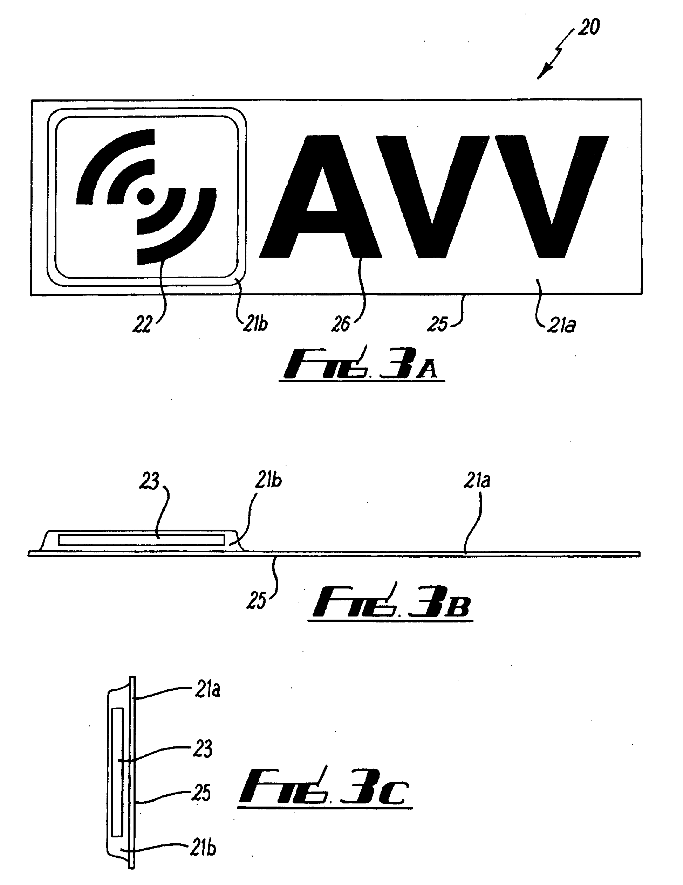

Figure 3A presents a perspective view and Figures 3B and 3C present side views of an antifouling sign in accordance with another embodiment of the present invention, the sign comprising a radio frequency identification (RFID) tag and a visual identification mark;

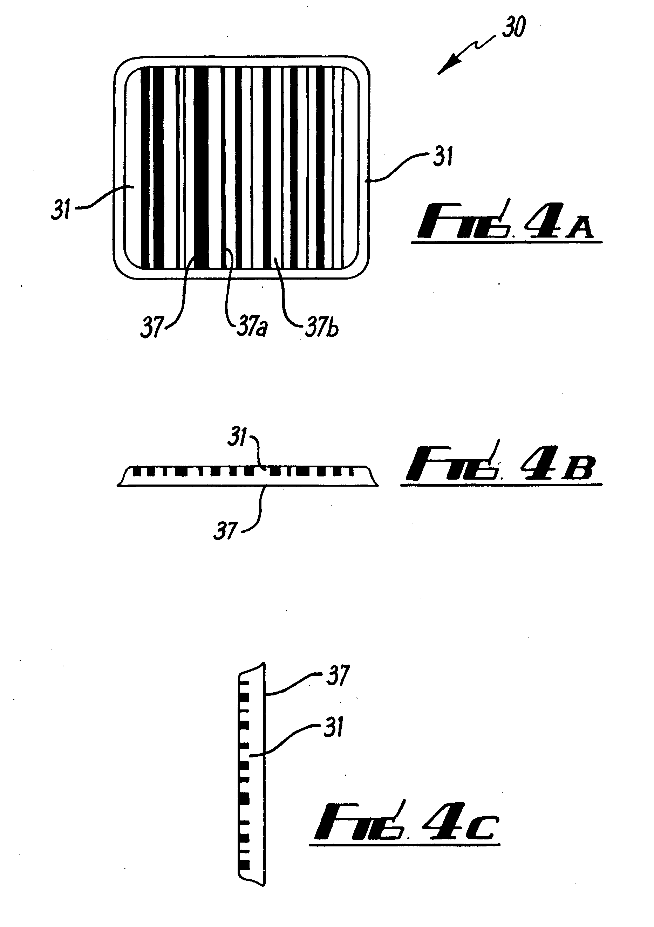

Figure 4A presents a perspective view and Figures 4B and 4C present side views of an antifouling sign in accordance with an embodiment of the present invention, the sign comprising a barcode;

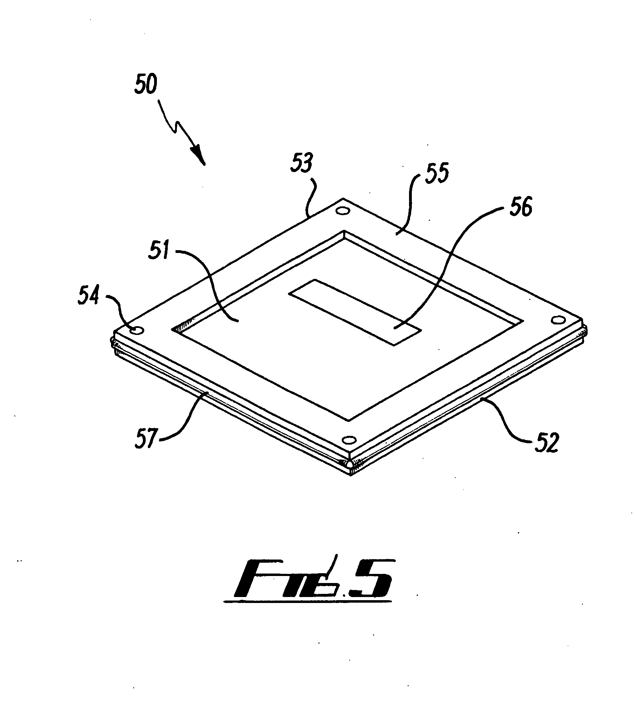

Figure 5 presents a schematic perspective view of an antifouling sign in accordance with an embodiment of the present invention, the sign comprising a radio frequency identification (RFID) tag; and

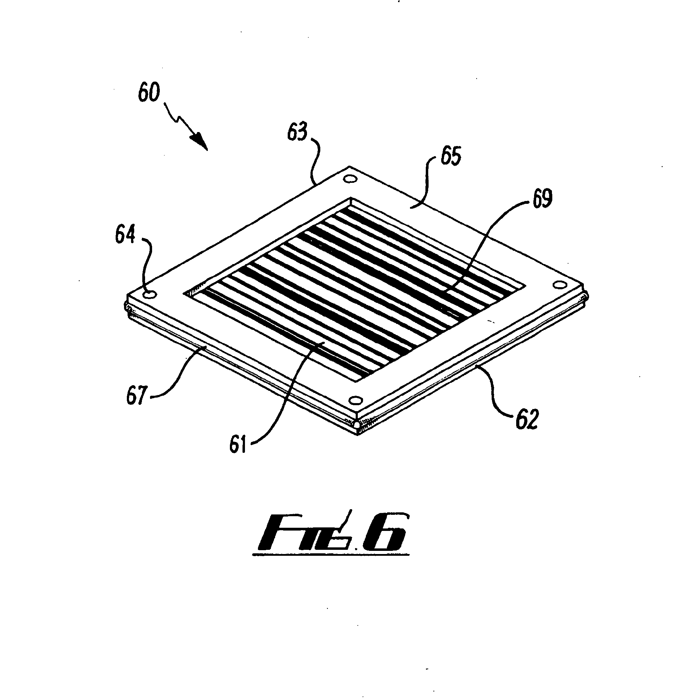

Figure 6 presents a schematic perspective view of an antifouling sign in accordance with another embodiment of the present invention, the sign comprising a barcode.

### Detailed Description

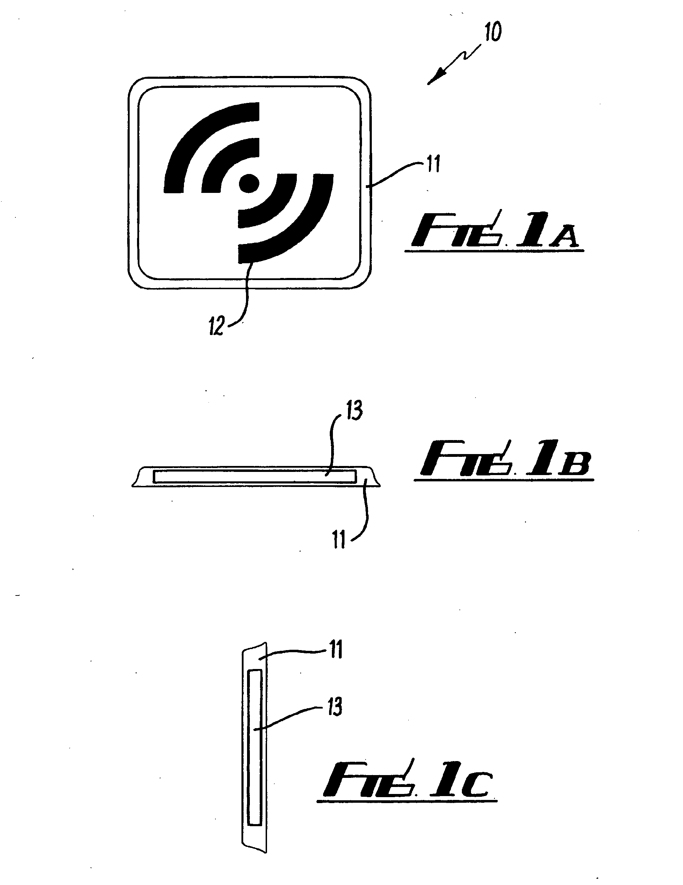

Figures 1A to 1C present an assembled perspective view of an antifouling sign 10 in accordance with one embodiment of the present invention. The antifouling sign 10 comprises an antifouling material 11, a Radio Frequency Identification (RFID) tag 13 and a surface logo 12. Figures 1B and 1C present an assembled perspective view of the same antifouling sign 10, comprising the antifouling material 11 and RFID tag 13. RFID tag 13 is embedded in the antifouling material 11 of antifouling sign 10 such that the material 11 surrounds the RFID tag 13.

In use, the antifouling sign 10 is secured to a subsea structure (not shown). The subsea structure may for example be a manifold, a well head, a tree, a subsea distribution assembly or a section of pipe. When the subsea structure and RFID tag 13 attached thereto are located subsea, the RFID tag 13 is read using a tag reader (not shown) suitable for use subsea. The tag reader is operated by a diver in shallow waters and a remotely operated vehicle (ROV) in deep waters.

Incorporating the RFID tag 13 in the antifouling material 11 has the advantage that the RFID tag 13 is protected from the surrounding environment when located on surface and subsea, preventing fouling of the RFID tag which will obscure its location and may interfere with its read range. The antifouling material 11 also provides a layer of physical protection to the RFID tag 13. Incorporating the RFID tag 13 in the antifouling material 11 therefore provides a sign that can be readily observed by a diver or the operator of a ROV so allowing them to quickly bring the tag reader (not shown) sufficiently close to the RFID tag 13, as is required for its correct operation. As a result, the information stored on the RFID tag 13 can be efficiently downloaded and/or updated. Since the diver or the operator of a ROV can more accurately identify the position of the RFID tag 13, then any lack of response to the downloading and/or updating process can be more confidently attributed to a failure of the RFID tag 13 itself.

Alternatively the RFID tag 13 is read onshore or topside by the tag reader (not shown). This provides a convenient and simple to operate system for maintaining an inventory of the subsea infrastructures to which signs 10 are attached. The RFID tag 13 is scanned before installation and on retrieval of the subsea infrastructure. The RFID tag 13 allows collection or collection and transmission of data related to, for example, the date of manufacture of the subsea infrastructure. Alternatively the RFID tag 13 references to specific information stored in a remote electronic file, for example on a local server or a web server.

The sign 10 also has the advantage that the RFID tag 13 contains additional information about the subsea structure that cannot be displayed by a visual identification mark. Displaying this additional information would not be practical on a sign that must be able to be read from a distance and possibly subsea with the necessary size constraints. The relevant data may be stored in the RFID tag itself, or in an alternative embodiment the RFID tag 13 may also reference to additional information stored in a remote electronic file, for example on a local server or a web server (not shown).

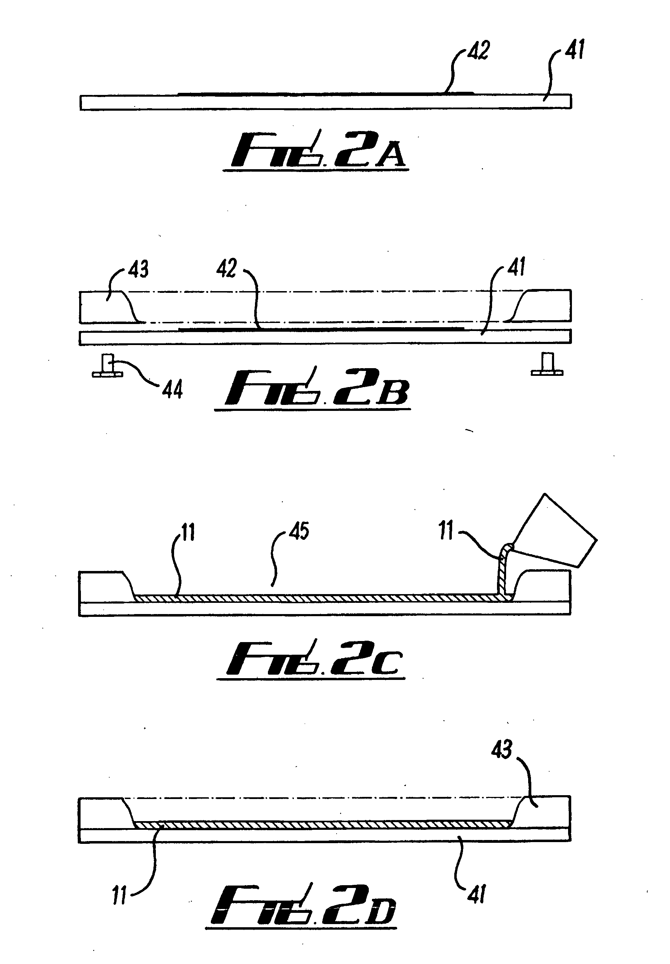

Figures 2A to 2H present a method of moulding antifouling material 11 to incorporate the RFID tag 13 of Figure 1.

Figure 2A presents a mould base 41 to which a logo 42 is applied. The logo is formed by cutting the desired shape from a sheet of cured or partially-cured antifouling material, for example in the manner described in UK patent number GB 2,326,372 B.

Figure 2B presents the mould base 41 to which mould sides 43 are secured using bolts 44. Figure 2C presents a hollow 45 between the mould base 41 and mould sides 43. Antifouling material 11 is shown being poured into the hollow 45. Enough antifouling material 11 is added to form a layer having a depth of between 1 and 2mm. Figure 2D presents the mould base 41, mould sides 43 and antifouling material 11. The antifouling material 11 is then allowed to partially cure.

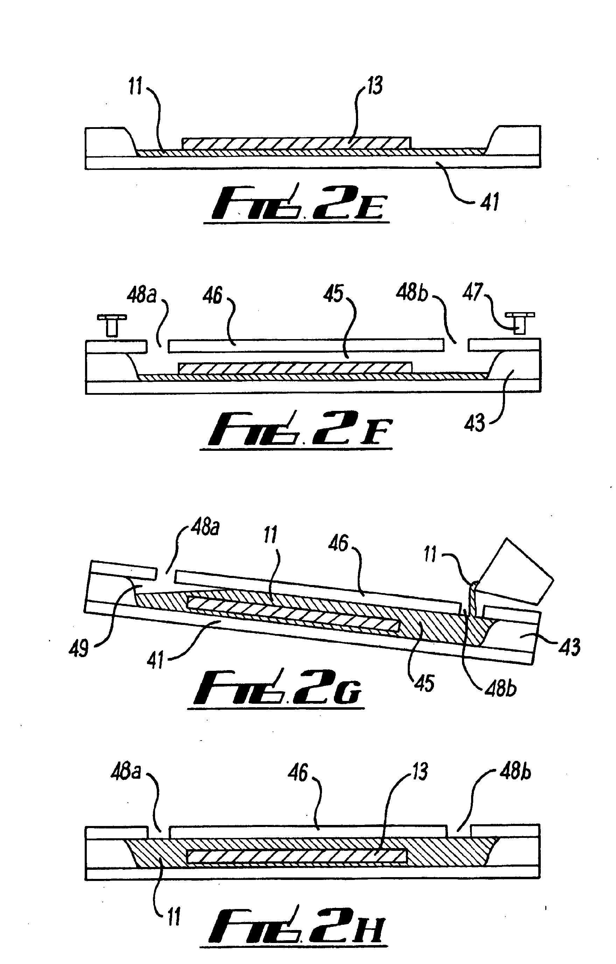

Figure 2E presents the partially cured antifouling material 11 on top of which is positioned an RFID tag 13. The partially cured antifouling material 11 acts as an adhesive to secure the RFID tag 13 in position relative to the mould base 41. The RFID tag 13 has a density of between 1.05 to 1.09g/cm³. The anti-fouling material 11 has a density of 1.3 g/cm³. As a result, if the RFID tag 13 is not secured relative to the mould base 41, there is a tendency for the RFID tag 13 to float to the surface during the subsequent manufacturing process steps outlined in Figures 2G and 2H.

Figure 2F presents a mould lid 46 being secured to the mould sides 43 using bolts 47. The mould lid 46 comprises apertures 48a and 48b. The hollow 45 is now defined by the mould base 41, mould sides 43 and mould lid 46. Figure 2G presents the mould base 41, mould sides 43 and mould lid 46. The antifouling material 11 is poured through the aperture 48b of the mould lid 46 into the hollow 45. The mould base 41, mould sides 43 and mould lid 46 are inclined to the horizontal so as to allow air and other gases (not shown) trapped in the antifouling material 31 to escape through the aperture 48a in the mould lid 46. Air gap 49 is gradually replaced with antifouling material 11 as more antifouling material 11 is poured into the hollow 45.

Figure 2H presents the arrangement when the air gap 49 of Figure 2G is completely filled with antifouling material 11. The apertures 48a and 48b in the mould lid 46 are kept open to allow any further air or other gases (not shown) trapped in the antifouling material 11 to escape. The antifouling material is then allowed to cure around the RFID tag 13. Once cured the mould base 41, mould sides 43 and mould lid 46 are separated and the antifouling material 11, incorporating the RFID tag 13, is removed.

Figure 3A presents an assembled perspective view of an antifouling sign 20 in accordance with another embodiment of the present invention. The antifouling sign 20 comprises a mount 25 made from antifouling material 21a. The mount 25 comprises a visual identification mark 26 on its surface. The antifouling sign 20 also comprises an antifouling material 21b, a Radio Frequency Identification (RFID) tag (not shown) and a surface. mounted logo 22. Figures 3A and 3C present an assembled perspective view of the same antifouling sign 20 comprising the mount 25, antifouling material 21a and 21b and RFI D tag 23. Thus in this embodiment, the RFID tag 23 encapsulated in an antifouling material 21 b is associated with a larger antifouling marker or sign 20.

Figure 4A presents an assembled perspective view of an antifouling sign 30 in accordance with a further alternative embodiment of the present invention. The antifouling sign 30 comprises a marker 31 formed from an antifouling material and an electronically readable tag in the form of a barcode 37. Figures 4B and 4C present an assembled perspective view of the same antifouling sign 30, comprising the antifouling material 31 and barcode 37. The barcode marking 37 is an optically readable representation of information. The barcode marking 37 in this case is a one-dimensional barcode comprising a series of parallel lines 37a of varying width. The width of the lines 37a and spaces 37b between the lines 37a define the digits zero to nine. The series of digits is used to encode an identification number. The identification number references to specific information stored in a remote electronic file, for example on a local server or a web server (not shown).

The barcode marking 37 is read by a barcode reader comprising a source of light (typically a laser), a sensor for detecting light and a lens for focusing reflected light into the sensor. The reader converts optical impulses into electrical impulses. The barcode reader decodes the electrical data into a format suitable for further processing by remote devices.

The sign 30 incorporating barcode 37 of the present invention resists fouling when located subsea and is resistant to damage caused by weathering when located on surface. The barcode 37 of the present invention can therefore be reliably read topsides, after installation subsea and when the installation has been stored on surface for an extended period of time. The barcode may also be read subsea with a reader adapted for subsea use.

The barcode markings are preferably formed by cutting the desired shape of lines, rings or a matrix from a sheet of cured or partially-cured antifouling material, and moulding it into the antifouling material, for example in the manner in which logos, icons, characters or figures are formed as described in UK patent number GB 2,326,372 B.

In an alternative embodiment the barcode marking comprises a series of concentric circles of varying width. The width of the circles and spaces between the circles define the digits zero to nine. In a further alternative embodiment the barcode marking is a two-dimensional barcode comprising a pattern of squares that encode the information. Two-dimensional barcodes (sometimes referred to as matrix codes) can encode more data than one-dimensional barcodes. Matrix codes are also generally more reliable in that the data can be retrieved despite a portion of the matrix being damaged. Matrix codes are read by a reader which incorporates a Charge Coupled Device (CCD) or other solid state electronic device for capturing an image and converting the image into a digital data stream for further processing.

In a further alternative embodiment the barcode marking is a High Capacity Colour Barcode (HCCB). This is a two-dimensional barcode that uses coloured triangles to encode information or define the digits zero to nine. Like other two-dimensional barcodes the HCCB barcodes can store more information per unit area of barcode compared to a one-dimensional barcode. The number, size and colour of the triangles used in an HCCB can be varied to encode different information. An example of a commercial implementation of an HCCB system is Microsoft ®Tag technology of Microsoft Corporation.

Figure 5 presents an assembled perspective view of an antifouling sign 50 in accordance with one embodiment of the present invention. The antifouling sign 50 comprises an antifouling material 51 held between a backing member 52 and fixing frame 53. The sign 50 also comprises a radio frequency identification (RFID) tag 56 incorporated in the anti-fouling material 51.

The sign 50 is held together with bolts 54 that extend from a surface 55 of the fixing frame 53, through apertures (not shown) in the fixing frame 53 and anchor to a bolt in a recess (not shown) on the backing member 52. The antifouling material 51 is a substantially planar layer. The entire perimeter of the antifouling material 51 is held within a mount 57 comprising the fixing frame 53 and the backing member 52. The backing member 52 and the fixing frame 53 of the mount 57 are made from polypropylene.

The RFID tag 56 is a passive RFID tag. A passive RFID tag has no battery and requires an external source of electromagnetic radiation to provoke signal transmission. The electrical power required for the transmission of a signal is supplied by radio waves emitted by a reader. An antenna in the tag converts the radio waves into electrical energy that is used to generate the signal. The signal contains encoded information held in the memory of the tag.

In an alternatively embodiment the RFID tag 56 is an active tag and comprises a battery to facilitate the periodic transmission of a signal. Alternatively the RFID tag 56 is a battery assisted passive tag. An assisted passive tag comprises a battery but generation of a signal requires an external source of electromagnetic radiation to initiate transmission of the signal.

Figure 6 presents an assembled perspective view of an antifouling sign 60 in accordance with an alternative embodiment of the present invention. The antifouling sign 60 comprises an antifouling material 61 held between a backing member 62 and fixing frame 63. The sign 60 also comprises a barcode 69 moulded from the antifouling material 61.

The sign 60 is held together with bolts 64 that extend from a surface 65 of the fixing frame 63, through apertures (not shown) in the fixing frame 63 and anchor to a bolt in a recess (not shown) on the backing member 62. The antifouling material 61 is a substantially planar layer. The entire perimeter of the antifouling material 61 is held within a mount 67 comprising the fixing frame 63 and the backing member 62. The backing member 62 and the fixing frame 63 of the mount 67 are made from polypropylene.

In use the antifouling sign 60 is secured to a subsea structure (not shown). The subsea structure may for example be a manifold, a well head, a tree, a subsea distribution assembly or a section of pipe.

The barcode 69 is a one-dimensional barcode comprising a series of parallel lines and spaces between the lines defining the digits zero to nine. The barcode 69 references to specific information stored in a remote electronic file on a local server (not shown). In an alternative embodiment the barcode 69 comprises a series of concentric circles of varying width. The width of the circles and spaces between the circles define the digits zero to nine.

The barcode markings are preferably formed by cutting the desired shape of lines, rings or a matrix from a sheet of cured or partially-cured antifouling material, and moulding it into the antifouling material, for example in the manner in which logos, icons, characters or figures are formed as described in UK patent number GB 2,326,372 B.

In an alternative embodiment the barcode 69 is a two-dimensional barcode comprising a pattern of squares that encodes the information.

In use the barcode 69 of Figure 6 and/or RFID tag 56 of Figure 5 may be read when the installation (not shown) is on the surface, before and/or after being located subsea. In an alternative embodiment the barcode 69 of Figure 6 and/or RFID tag 56 of Figure 5 is read when the installation is located subsea. When reading the barcode 69, a suitable high/low frequency angle is selected depending on whether the barcode 69 is being read on surface and therefore out of the water or subsea.

In alternative embodiments the backing member 52 & 62 and fixing frame 53 & 63 of Figures 5 and 6 respectively may be made from polyethylene, polyvinyl chloride, unplasticised polyvinyl chloride, polystyrene, polyvinylidene fluoride, acrylic compounds, synthetic rubber such as chlorosulfonated polyethylene, a polycarbonate polymer, or a polyisobutene polymer.

In further alternative embodiments the antifouling material 51 & 61 of Figures 5 and 6 respectively provides a visual display of information, for example a series of letters or numerals. The information held in the memory of the RFID tag 56 of Figure 5 and/or encoded in the barcode 69 of Figure 6 may be a duplication of or complementary to the visual information displayed by the signs 50 and 60.

Alternative embodiments of the invention may include electronically readable and/or writable tags which consist of diagonally oriented lines to encode binary data on the surface, such as those marketed under the Xerox Dataglyph or MICROGLYPH ® technology brands by Xerox Corporation.

The invention provides an antifouling sign for use on a subsea structure. The sign comprises a marker formed from an antifouling material and an electronically readable and/or writable identification tag incorporated in the marker. In one embodiment the tag is an RFID tag which is incorporated in the antifouling marker. In another the tag is a barcode formed in the antifouling marker.

By employing an antifouling marker to provide a means for visual identification of the electronically readable and/or writable tag, the subsea location of the tag can readily be observed by a diver or the operator of a ROV so allowing them to quickly bring a tag reader in communication range with the tag, as is required for its correct operation. As a result, the information stored on the electronically readable and/or writable identification tag can be efficiently read, downloaded and/or updated.

The foregoing description of the invention has been presented for purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention.

## Claims

1. An antifouling sign (10, 20, 30, 50, 60), the sign comprising a marker (12, 22, 26, 42) formed from an antifouling material (11, 31, 21 a, 21b, 51, 61);
**characterised in that** an electronically readable and/or writable identification tag (13, 23, 37, 56, 69) is incorporated in the marker.

2. The antifouling sign (10, 20, 30, 50, 60) as claimed in claim 1 wherein the electronically readable and/or writable identification tag (13, 23, 37, 56, 69) is integrated into the antifouling material (11, 31, 21 a, 21 b, 51, 61) of the marker (12, 22, 26, 42).

3. The antifouling sign (10, 20, 30, 50, 60) as claimed in any preceding claim, wherein the electronically readable and/or writable identification tag (13, 23, 37 56, 69) is fully or partially embedded in the antifouling material (11, 31, 21 a, 21 b, 51, 61) of the marker (12, 22, 26, 42).

4. The antifouling sign (10, 20, 30, 50, 60) as claimed in any preceding claim, wherein the electronically readable and/or writable identification tag (13, 23, 37, 56, 69) is operable to be read when the antifouling sign is located subsea.

5. The antifouling sign (10, 20, 30, 50, 60) as claimed in any preceding claim, wherein the antifouling material (11, 31, 21a, 21 b, 51, 61) comprises a polymeric material.

6. The antifouling sign (10, 20, 30, 50, 60) as claimed in claim 5, wherein the antifouling material (11, 31, 21a, 21b, 51, 61) comprises a polymeric antifouling silicone based composition.

7. The antifouling sign (10, 20, 30, 50, 60) as claimed in any preceding claim, wherein the antifouling material (11, 31, 21 a, 21 b, 51, 61) comprises a fluid organic compound which has a tendency to exude from a surface of the sign when in use.

8. The antifouling sign (10, 20, 30, 50, 60) as claimed in any preceding claim, wherein the identification tag (13, 23, 37, 56, 69) comprises a radio frequency identification (RFID) tag (13, 23, 56).

9. The antifouling sign (10, 20, 30, 50, 60) as claimed in any preceding claim, wherein the identification tag comprises an optically readable tag (37, 69).

10. The antifouling sign (10, 20, 30, 50, 60) as claimed in claim 9, wherein the optically readable tag comprises a one or two dimensional barcode (37, 69).

11. A method of producing an antifouling sign (10, 20, 30, 50, 60) comprising:
providing an antifouling material (11, 31, 21a, 21b, 51, 61);
**characterised in that** the method comprises incorporating an electronically readable and/or writable identification tag (13, 23, 37, 56, 69) in the antifouling material (11, 31, 21 a, 21 b, 51, 61).

12. The method as claimed in claim 11, wherein the antifouling material (11, 31, 21 a, 21 b, 51, 61) is moulded around the electronically readable and/or writable identification tag (13, 23, 37, 56, 69).

13. The method as claimed in claim 11 or 12, wherein a volume of antifouling material (11, 31, 21a, 21b, 51, 61) is allowed to partially cure before locating the electronically readable and/or writable identification tag (13, 23, 37, 56, 69).

14. The method as claimed in any of claims 11 to 13, comprising the steps of:
forming an optically readable pattern from a cured or partially cured antifouling material (11,31, 21a, 21b, 51, 61); and
moulding antifouling material (11, 31, 21a, 21b, 51, 61) around the optically readable pattern.

15. A method of retrieving data from an antifouling sign (10, 20, 30, 50, 60), the method comprising the steps of:
providing a sign at a subsea location, the sign comprising a marker (12, 22, 26, 42) formed from an antifouling material (11, 31, 21 a, 21 b, 51, 61);
**characterised in that** the sign comprises an electronically readable and/or writable identification tag (13, 23, 37, 56, 69) incorporated in the marker (12, 22, 26, 42);
and the method comprises:
moving an electronic reading apparatus to within a range at which the sign can be electronically read; and
electronically reading the electronic readable identification tag (13, 23, 37, 56, 69) using the electronic reading apparatus.

## Patentansprüche

1. Ein anwuchsverhinderndes Schild (10, 20, 30, 50, 60), wobei das Schild eine Markierung (12, 22, 26, 42) aus einem anwuchsverhindernden Material (11, 31, 21 a, 21 b, 51, 61) umfasst;
**dadurch gekennzeichnet, dass** eine elektronisch lesbare und/oder schreibbare Erkennungsmarke (13, 23, 37, 56, 69) in die Markierung integriert ist.

2. Das anwuchsverhindernde Schild (10, 20, 30, 50, 60) gemäß Anspruch 1, in dem die elektronisch lesbare und/oder schreibbare Erkennungsmarke (13, 23, 37, 56, 69) in das anwuchsverhindernde Material (11, 31, 21 a, 21 b, 51, 61) der Markierung (12, 22, 26, 42) integriert ist.

3. Das anwuchsverhindernde Schild (10, 20, 30, 50, 60) gemäß einem der vorhergehenden Ansprüche, in dem die elektronisch lesbare und/oder schreibbare Erkennungsmarke (13, 23, 37 56, 69) vollständig oder teilweise in dem anwuchsverhindernden Material (11, 31, 21 a, 21 b, 51, 61) der Markierung (12, 22, 26, 42) eingeschlossen ist.

4. Das anwuchsverhindernde Schild (10, 20, 30, 50, 60) gemäß einem der vorhergehenden Ansprüche, in dem die elektronisch lesbare und/oder schreibbare Erkennungsmarke (13, 23, 37, 56, 69) gelesen werden kann, wenn sich das anwuchsverhindernde Schild unter Wasser befindet.

5. Das anwuchsverhindernde Schild (10, 20, 30, 50, 60) gemäß einem der vorhergehenden Ansprüche, in dem das anwuchsverhindernde Material (11, 31, 21 a, 21 b, 51, 61) ein Polymer-Material umfasst.

6. Das anwuchsverhindernde Schild (10, 20, 30, 50, 60) gemäß Anspruch 5, in dem das anwuchsverhindernde Material (11, 31, 21 a, 21 b, 51, 61) ein anwuchsverhinderndes Gemisch auf Polymer-Silikon-Basis umfasst.

7. Das anwuchsverhindernde Schild (10, 20, 30, 50, 60) gemäß einem der vorhergehenden Ansprüche, in dem das anwuchsverhindernde Material (11, 31, 21 a, 21 b, 51, 61) ein organisches Flüssiggemisch umfasst, welches dazu neigt, von einer Oberfläche des Schilds bei dessen Betrieb ausgeschieden zu werden.

8. Das anwuchsverhindernde Schild (10, 20, 30, 50, 60) gemäß einem der vorhergehenden Ansprüche, in dem die Erkennungsmarke (13, 23, 37, 56, 69) eine Radiofrequenz-Identifikationsmarke (RFID) (13, 23, 56) umfasst.

9. Das anwuchsverhindernde Schild (10, 20, 30, 50, 60) gemäß einem der vorhergehenden Ansprüche, in dem die Erkennungsmarke eine optisch lesbare Marke (37, 69) umfasst.

10. Das anwuchsverhindernde Schild (10, 20, 30, 50, 60) gemäß Anspruch 9, in dem die optisch lesbare Marke einen ein- oder zweidimensionalen Strichcode (37, 69) umfasst.

11. Eine Methode zur Herstellung eines anwuchsverhindernden Schildes (10, 20, 30, 50, 60), bestehend aus:
Bereitstellung eines anwuchsverhindernden Materials (11, 31, 21 a, 21 b, 51, 61);
**dadurch gekennzeichnet, dass** die Methode die Integration einer elektronisch lesbaren und/oder schreibbaren Erkennungsmarke (13, 23, 37, 56, 69) in das anwuchsverhindernde Material (11, 31, 21 a, 21 b, 51, 61) umfasst.

12. Die Methode gemäß Anspruch 11, in der das anwuchsverhindernde Material (11, 31, 21 a, 21 b, 51, 61) um die elektronisch lesbare und/oder schreibbare Erkennungsmarke (13, 23, 37, 56, 69) gegossen wird.

13. Die Methode gemäß Anspruch 11 oder 12, in der eine Menge des anwuchsverhindernden Materials (11, 31, 21 a, 21 b, 51, 61) erst teilweise härten kann, bevor die elektronisch lesbare und/oder schreibbare Erkennungsmarke (13, 23, 37, 56, 69) lokalisiert wird.

14. Die Methode gemäß einem der vorhergehenden Ansprüche 11 bis 13, bestehend aus den folgenden Schritten:
Formung eines optisch lesbaren Modells aus einem gehärteten oder teilweise gehärteten anwuchsverhindernden Materials (11, 31, 21 a, 21 b, 51, 61); und
Gießen des anwuchsverhindernden Materials (11, 31, 21 a, 21 b, 51, 61) um das optisch lesbare Modell.

15. Eine Methode zum Abrufen von Daten aus einem anwuchsverhindernden Schild (10, 20, 30, 50, 60), wobei die Methode aus den folgenden Schritten besteht:
Bereitstellung eines Schildes an einem Ort unter Wasser, wobei das Schild eine Markierung (12, 22, 26, 42) aus einem anwuchsverhindernden Material (11, 31, 21a, 21b, 51, 61) enthält;
**dadurch gekennzeichnet, dass** das Schild eine elektronisch lesbare und/oder schreibbare Erkennungsmarke (13, 23, 37, 56, 69) umfasst, die in die Markierung (12, 22, 26, 42) integriert ist;
und diese Methode umfasst:
das Bewegen eines elektronischen Lesegeräts in eine Entfernung vor das Schild, aus der das Schild elektronisch gelesen werden kann; und
das elektronische Lesen der elektronisch lesbaren Erkennungsmarke (13, 23, 37, 56, 69) mithilfe des elektronischen Lesegeräts.

## Revendications

1. Un indicateur anti-salissure (10, 20, 30, 50, 60), comprenant un marqueur (12, 22, 26, 42) en matériau anti-salissure (11, 31, 21 a, 21 b, 51, 61); **caractérisé par le fait qu'**une étiquette (13, 23, 37, 56, 69) d'identification pouvant être lue et/ou inscrite par moyen électronique, est incorporée dans le marqueur.

2. L'indicateur anti-salissure (10, 20, 30, 50, 60), conforme à la revendication 1, dans lequel l'étiquette (13, 23, 37, 56, 69) d'identification pouvant être lue et/ou inscrite par moyen électronique, est intégrée dans le matériau anti- salissure (11, 31, 21 a, 21b, 51, 61) du marqueur (12, 22, 26, 42).

3. L'indicateur anti-salissure (10, 20, 30, 50, 60) conforme à une revendication précédente, dans lequel l'étiquette d'identification (13, 23, 37 56, 69) pouvant être lue et/ou inscrite par moyen électronique est incorporée partiellement ou totalement dans le matériau anti-salissure (11, 31, 21 a, 21 b, 51, 61) du marqueur (12, 22, 26, 42).

4. L'indicateur anti-salissure (10, 20, 30, 50, 60) conforme à une revendication précédente, dans lequel l'étiquette d'identification (13, 23, 37, 56, 69) pouvant être lue et/ou inscrite par moyen électronique peut également être lue lorsque l'indicateur anti-salissure est immergé sous la mer.

5. L'indicateur anti-salissure (10, 20, 30, 50, 60) conforme à une revendication précédente, dans lequel le matériau anti-salissure (11, 31, 21 a, 21 b, 51, 61) comprend un polymère.

6. L'indicateur anti-salissure (10, 20, 30, 50, 60) conforme à la revendication 5, dans lequel le matériau anti-salissure (11, 31, 21 a, 21 b, 51, 61) comprend une composition à base de silicone anti-salissure polymérique.

7. L'indicateur anti-salissure (10, 20, 30, 50, 60) conforme à une revendication précédente, dans lequel le matériau anti-salissure (11, 31, 21 a, 21 b, 51, 61) comprend un composé organique fluide ayant tendance à suinter de la surface de l'indicateur lorsqu'il est utilisé.

8. L'indicateur anti-salissure (10, 20, 30, 50, 60) conforme à une revendication précédente, dans lequel l'étiquette d'identification (13, 23, 37, 56, 69) comprend un marqueur RFID (radio frequency identification) (13, 23, 56).

9. L'indicateur anti-salissure (10, 20, 30, 50, 60) conforme à une revendication précédente, dans lequel l'étiquette d'identification est une étiquette (37,69) pouvant être lue par des moyens optiques.

10. L'indicateur anti-salissure (10, 20, 30, 50, 60) conforme à la revendication 9, dans lequel l'étiquette pouvant être lue par des moyens optiques comprend un ou deux codes-barres (37,69).

11. Une méthode de production d'un indicateur anti-salissure (10, 20, 30, 50, 60):
formé d'un matériau anti-salissure (11, 31, 21a, 21 b, 51, 61);
cette méthode consistant à incorporer une étiquette d'identification (13, 23, 37, 56, 69) pouvant être lue et/ou inscrite par des moyens électroniques, dans le matériau anti-salissure (11, 31, 21 a, 21 b, 51, 61).

12. La méthode conforme à la revendication 11, dans laquelle le matériau anti-salissure (11, 31, 21 a, 21 b, 51, 61) est moulé autour d'une étiquette d'identification (13, 23, 37, 56, 69) pouvant être lue et/ou inscrite par des moyens électroniques.

13. La méthode conforme à la revendication 11 ou 12, dans laquelle on laisse durcir partiellement un volume de matériau anti-salissure (11, 31, 21 a, 21 b, 51, 61) avant d'implanter l'étiquette d'identification (13, 23, 37, 56, 69) pouvant être lue et/ou inscrite par des moyens électroniques.

14. La méthode conforme à l'une des revendications 11 à 13, comprenant les étapes suivantes:
Formation d'un motif pouvant être lu par des moyens optiques à partir d'un matériau anti-salissure (11, 31, 21 a, 21 b, 51, 61); durci totalement ou partiellement et moulage du matériau anti-salissure (11, 31, 21 a, 21 b, 51, 61) autour du motif pouvant être lu par des moyens optiques.

15. Une méthode pour récupérer les données d'un indicateur anti-salissure (10, 20, 30, 50, 60), comprenant les étapes suivantes:
implanter un indicateur sous la mer, cet indicateur comprenant un marqueur (12, 22, 26, 42) formé d'un matériau anti-salissure (11, 31, 21 a, 21 b, 51, 61);
**caractérisé par le fait que** l'indicateur comprend une étiquette d'identification (13, 23, 37, 56, 69) pouvant être lue et/ou inscrite par des moyens électroniques incorporée dans le marqueur (12, 22, 26, 42);
transfert d'un lecteur électronique à une distance de l'indicateur permettant de lire ces données par des moyens électroniques; et lecture, par des moyens électroniques, de l'étiquette d'identification (13, 23, 37, 56, 69) en utilisant le lecteur électronique.
